# EUROPEAN PATENT SPECIFICATION

(11) **EP 1 504 192 B1**
(45) Date of publication and mention of the grant of the patent: **27.09.2006**
(21) Application number: 03727942.9
(22) Date of filing: 08.05.2003
(51) Int. Cl.: F04C 15/00, F16N 13/20

(54) **VARIABLE-DELIVERY ROTARY PUMP, IN PARTICULAR FOR OIL**
PUMPE MIT VARIABLER FÖRDERMENGE, INSBESONDERE FÜR ÖL
POMPE ROTATIVE A DEBIT VARIABLE, NOTAMMENT A HUILE

(30) Priority: 10.05.2002 IT BO20020275
(43) Date of publication of application: 09.02.2005
(73) Proprietor: Pierburg S.p.A., 66034 Lanciano (IT)
(72) Inventor: MARIOTTI, Luca, I-56100 Pisa (IT)
(74) Representative: Jorio, Paolo
(86) International application number: PCT/IT2003/000279
(87) International publication number: WO 2003/095840

(56) References cited:
- EP-A- 0 076 033
- EP-A- 0 846 861
- EP-A- 1 182 351

## Description

### TECHNICAL FIELD

The present invention relates to a variable-delivery rotary pump, in particular for oil.

More specifically, the present invention relates to a variable-delivery rotary pump for feeding oil to a vehicle internal combustion engine lubricating circuit eg EP-A-0 076 033, to which the following description refers purely by way of example.

### BACKGROUND ART

An automotive variable-delivery rotary pump is known comprising at least two rotors, which mesh to rotate about respective substantially parallel axes of rotation, and one of which is connected in angularly fixed manner to a drive shaft of the internal combustion engine.

Since oil delivery to the lubricating circuit is proportional to the rotation speeds of the rotors, i.e. to the rotation speed of the drive shaft, known pumps of the above type must be made to ensure oil delivery to the lubricating circuit is at least equal to a minimum delivery at relatively low drive shaft rotation speeds, and is at most equal to a maximum delivery at relatively high drive shaft rotation speeds.

Known pumps of the above type are therefore normally fitted with a bypass valve downstream from the rotors, and which, at relatively high drive shaft rotation speed, recirculates part of the oil compressed between the rotors to a pump oil feed tank.

Since the oil recirculated by the bypass valve to the feed tank is compressed by the pump anyway, known pumps of the above type have the major drawback of relatively high power consumption and, hence, relatively poor efficiency, at relatively high drive shaft rotation speeds.

### DISCLOSURE OF INVENTION

It is an object of the present invention to provide a variable-delivery rotary pump, in particular for oil, designed to eliminate the aforementioned drawbacks.

According to the present invention, there is provided a variable-delivery rotary pump, in particular for oil, the pump comprising at least a first and a second rotor meshing with each other and having, respectively, a first and a second longitudinal axis substantially parallel to each other; and first actuating means for rotating said first and said second rotor about said first and said second axis respectively; and being characterized by also comprising second actuating means for rotating the second axis about the first axis.

### BRIEF DESCRIPTION OF THE DRAWINGS

A non-limiting embodiment of the present invention will be described by way of example with reference to the accompanying drawings, in which:
Figure 1 shows a schematic side view, with parts removed for clarity, of a preferred embodiment of the pump according to the present invention;
Figure 2 shows a section along line II-II in Figure 1;
Figure 3 shows a section along line III-III in Figure 1.

### BEST MODE FOR CARRYING OUT THE INVENTION

With reference to the accompanying drawings, number 1 indicates as a whole a variable-delivery rotary pump for feeding oil to a lubricating circuit (not shown) of an internal combustion engine (not shown) of a vehicle (not shown).

Pump 1 comprises a casing 2, which is substantially in the form of a substantially rectangular-section parallelepiped, has a longitudinal axis 3, and is bounded axially by two flat surfaces 4 perpendicular to axis 3. Casing 2 also has a cylindrical cavity 5, which is coaxial with axis 3, opens out at one of surfaces 4 (hereinafter indicated 4a), and is bounded axially by a lateral wall 6 perpendicular to axis 3.

Pump 1 also comprises a tubular body 7, which engages cavity 5 in sliding manner and is connected in rotary manner to casing 2 by a central hub 8 coaxial with axis 3 and extending through wall 6 and outwards of casing 2. Body 7 comprises an annular flange 9, which extends radially outwards from an outer surface of hub 8, has a longitudinal axis 10 substantially parallel to axis 3, and contacts wall 6 when body 7 is inserted axially inside cavity 5; and a sleeve 11, which extends coaxially with axis 10 from a peripheral edge of flange 9, and has a diameter smaller than a diameter of cavity 5.

Body 7 is engaged in rotary and axially sliding manner by a substantially tubular outer rotor 12, which is coaxial with axis 10, has an outside diameter approximately equal to but no larger than an inside diameter of sleeve 11, and has internal teeth 13 which mesh with external teeth 14 of an inner rotor 15 housed inside rotor 12 and coaxial with axis 3. Rotor 12 is fitted to a shaft 16, which is coaxial with axis 3, is fitted in rotary and axially sliding manner through hub 8 and flange 9, and is rotated about axis 3 by a drive shaft (not shown) of the internal combustion engine (not shown).

When body 7 is positioned contacting wall 6, and rotors 12 and 15 are positioned contacting flange 9, tubular body 7, outer rotor 12 and inner rotor 15 are locked axially with respect to cavity 5 by a lock plate 17 fastened to surface 4a by a number of screws (not shown) parallel to and equally spaced about axis 3.

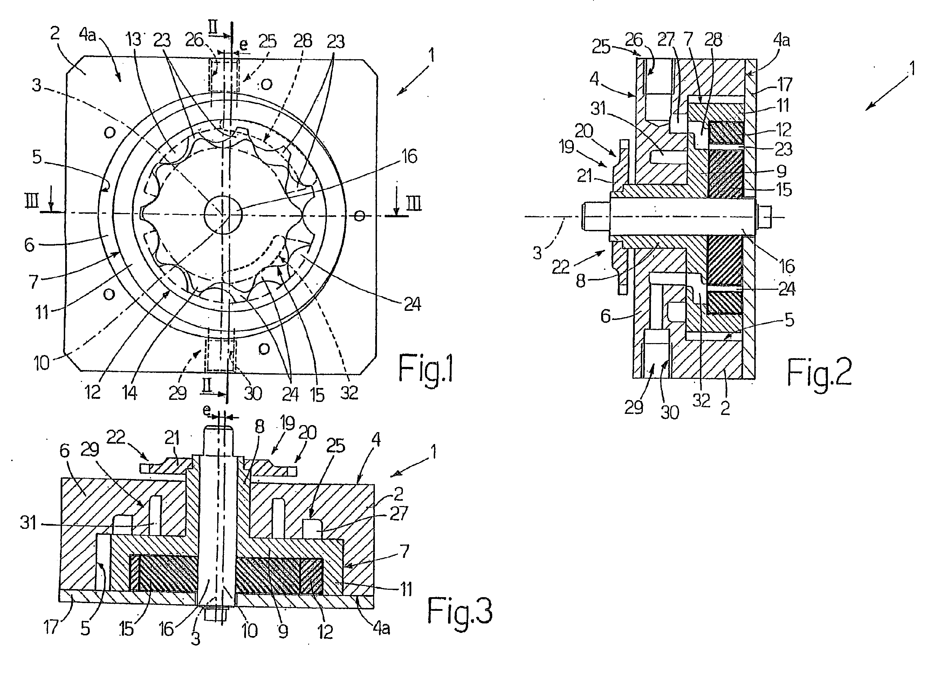

Hub 8 and, hence, body 7 are rotated about axis 3 by an actuating device 19 comprising a chain drive 20, which in turn comprises two sprockets 21, one (shown in Figures 2 and 3) fitted to hub 8, and the other (not shown) fitted to an output shaft (not shown) of an electric motor (not shown); and a chain (not shown) looped about sprockets 21.

Together with hub 8 and body 7, device 19 defines a drive device 22, which, given the eccentricity "e" of axes 3 and 10, rotates rotor 12 and, hence, axis 10 about axis 3.

With reference to Figures 1 and 2, rotors 12 and 15 define, together with body 7 and plate 17, a number of intake chambers 23 increasing in volume in the rotation direction (clockwise in Figure 1) of rotors 12, 15 about respective axes 10, 3; and a number of delivery chambers 24 decreasing in volume in the rotation direction (clockwise in Figure 1) of rotors 12, 15 about respective axes 10, 3.

Chambers 23 communicate with an oil tank (not shown) via an intake circuit 25 comprising an inlet hole 26 formed radially through casing 2; an annular conduit 27 formed in wall 6, coaxially with axis 3, facing cavity 5, and communicating with hole 26; and a slit 28 formed through flange 9, extending about axis 10, and communicating with chambers 23 and conduit 27.

Chambers 24 communicate with the lubricating circuit (not shown) via a delivery circuit 29 comprising an outlet hole 30 formed radially through casing 2; an annular conduit 31 formed in wall 6, coaxially with conduit 27 and axis 3, facing cavity 5, and communicating with hole 30; and a slit 32 formed through flange 9, extending about axis 10, and communicating with delivery chambers 24 and conduit 31.

Operation of pump 1 will now be described, bearing in mind that oil delivery to outlet hole 30 substantially equals the displacement of pump 1 multiplied by the algebraic difference between the rotation speed of inner rotor 15 about axis 3 and the rotation speed of outer rotor 12 about axis 3; assuming pump 1 has a relatively high displacement ensuring the minimum oil delivery required to lubricate the engine (not shown) at low engine speed, i.e. at relatively low rotation speeds of shaft 16; and as of the instant in which shaft 16 is rotated about axis 3 (clockwise in Figure 1), and drive device 22 is deactivated.

In the above conditions, the rotation speed of rotor 12 and, therefore, of axis 10 about axis 3 is zero, and oil feed to outlet hole 30 is proportional to the rotation speed of rotor 15 about axis 3, and so increases alongside an increase in the speed of the engine (not shown).

When rotation of rotor 15 about axis 3 reaches a given speed, device 22 is activated to rotate rotor 12 and, hence, axis 10 about axis 3 in the same rotation direction as rotor 15, i.e. clockwise, so that oil feed to outlet hole 30 is proportional to the difference between the rotation speeds of rotors 15 and 12 about axis 3, and can therefore be maintained below a maximum value.

Operation of pump 1 will now be described, assuming pump 1 has a relatively low displacement ensuring the maximum oil delivery required to lubricate the engine (not shown) at high engine speed, i.e. at relatively high rotation speeds of shaft 16; and as of the instant in which shaft 16 is rotated about axis 3 (clockwise in Figure 1), and drive device 22 is deactivated, i.e. as of the instant in which, since both displacement and the rotation speed of rotor 15 about axis 3 are relatively low, and the rotation speed of rotor 12 about axis 3 is zero, oil feed to outlet hole 30 is below the minimum required to lubricate the engine (not shown).

In the above conditions, i.e. at low engine speed, device 22 is activated to rotate rotor 12 and, therefore, axis 10 about axis 3 in the opposite direction to rotation of rotor 15, i.e. anticlockwise, so that oil feed to outlet hole 30 is proportional to the sum of the rotation speeds of rotors 15 and 12 about axis 3, and is at least equal to the minimum delivery required to lubricate the engine (not shown).

When the rotation speed of rotor 15 about axis 3 equals at least a minimum value, i.e. at high engine speed, device 22 is deactivated to zero the rotation speed of rotor 12 about axis 3, and oil feed to outlet hole 30 is proportional solely to the rotation speed of rotor 15 about axis 3.

In connection with the above, it should be pointed out that the rotation speed of rotor 12 and, hence, of axis 10 about axis 3 can be controlled selectively as a function of various operating parameters of the engine (not shown).

In any operating condition of the engine (not shown), drive device 22 therefore ensures correct oil feed to outlet hole 30, thus drastically reducing the power consumption, and improving the efficiency, of pump 1.

## Claims

1. A variable-delivery rotary pump, in particular for oil, the pump comprising at least a first and a second rotor (15, 12) meshing with each other and having, respectively, a first and a second longitudinal axis (3, 10) substantially parallel to each other; and first actuating means (16) for rotating said first and said second rotor (15, 12) about said first and said second axis (3, 10) respectively; and also comprising second actuating means (22) for rotating the second axis (10) about the first axis (3); the variable-delivery rotary pump being **characterized by** the fact that said second actuating means (22) is able to rotate the second axis (10), with a given rotation speed, about the first axis (3) in the same direction as, and in the opposite direction to, rotation of the first rotor (15) about the first axis (3) for obtaining different values of the flow rate.

2. A pump as claimed in Claim 1, wherein said second rotor (12) is a tubular rotor extending about said first rotor (15).

3. A pump as claimed in Claim 1 or 2, wherein said second actuating means (22) comprise a tubular body (7) extending about said second rotor (12) and coaxial with said second axis (10); and an actuating device (19) for rotating the tubular body (7) about said first axis (3).

4. A pump as claimed in Claim 3, wherein said tubular body (7) has an inside diameter approximately equal to but no smaller than an outside diameter of said second rotor (12).

5. A pump as claimed in Claim 3 or 4, wherein the second actuating means (22) also comprise a central hub (8) connected to said actuating device (19) to rotate about said first axis (3); said tubular body (7) being integral with the hub (8).

6. A pump as claimed in Claim 5, wherein said first rotor (15) has an input shaft (16) extending through said hub (8) and hot connected in rotary manner to the hub (8).

7. A pump as claimed in any one of Claims 3 to 6, and also comprising a casing (2) for supporting said first and said second rotor (15, 12) and the tubular body (7) in rotary manner; the casing (2) defining, together with said first and said second rotor (15, 12) and the tubular body (7), at least one intake chamber (23) and at least one delivery chamber (24).

8. A pump as claimed in Claim 7, and also comprising an intake circuit (25) and a delivery circuit (29), which communicate with said intake chamber (23) and said delivery chamber (24) respectively.

9. A pump as claimed in Claim 8, wherein said intake and delivery circuits (25, 29) comprise respective annular conduits (27, 31) formed in said casing (2); and respective slits (28, 32) formed through said tubular body (7) so as, in use, to at least partly face the relative said annular conduits (27, 31).

10. A pump as claimed in Claim 9, wherein said annular conduits (27, 31) are substantially coaxial with each other and with said first axis (3).

## Patentansprüche

1. Pumpe mit variabler Fördermenge, insbesondere für Öl, welche Pumpe wenigstens einen ersten und zweiten Rotor (15, 12), die ineinander eingreifen, und jeweils eine erste und zweite Längsachse (3, 10) umfasst, die im Wesentlichen parallel zueinander verlaufen, und erste Betätigungsmittel (16), um den ersten und zweiten Rotor (15, 12) jeweils um die erste und zweite Achse (3, 10) zu drehen, und zweite Betätigungsmittel (22), um die zweite Achse (10) um die erste Achse (3) zu drehen, welche Pumpe variabler Fördermenge **dadurch gekennzeichnet ist, dass** die zweiten Betätigungsmittel (22) in der Lage sind, die zweite Achse (10) mit einer gegebenen Rotationsgeschwindigkeit um die erste Achse (3) in gleicher Richtung und in gegensätzlicher Richtung zur Rotation des ersten Rotors (15) um die erste Achse (3) zu drehen, um unterschiedliche Werte für die Flussrate zu erzielen.

2. Pumpe nach Anspruch 1, bei welcher der zweite Rotor (12) ein rohrförmiger Rotor ist, der sich um den ersten Rotor (15) herum erstreckt.

3. Pumpe nach Anspruch 1 oder 2, bei der die zweiten Betätigungsmittel (22) einen rohrförmigen Körper (7), der sich um den zweiten Rotor (12) herum erstreckt und koaxial zu der zweiten Achse (10) verläuft und eine Betätigungseinrichtung (19) umfassen, um den rohrförmigen Körper (7) um die erste Achse (3) zu drehen.

4. Pumpe nach Anspruch 3, bei der der rohrförmige Körper (7) einen Innendurchmesser hat, der ungefähr gleich aber nicht kleiner als der Außendurchmesser des zweiten Rotors (12) ist.

5. Pumpe nach Anspruch 3 oder 4, bei der die zweiten Betätigungsmittel (22) auch eine zentrale Nabe (8) umfassen, die mit der Betätigungseinrichtung (19) verbunden ist, um um die erste Achse (3) zu drehen, welcher rohrformige Körper (7) mit der Nabe (8) integriert ist.

6. Pumpe nach Anspruch 5, bei der der erste Rotor (15) eine Eingangswelle (16) hat, die sich durch die Nabe (8) hindurch erstreckt und nicht in rotierbarer Weise mit der Nabe (8) verbunden ist.

7. Pumpe nach einem der Ansprüche 3 bis 6, die ebenfalls ein Gehäuse (2) umfasst, um den ersten und zweiten Rotor (15, 12) und den rohrförmigen Körper (7) in drehbarer Weise aufzunehmen, welches Gehäuse (2) zusammen mit dem ersten und zweiten Rotor (15, 12) und dem rohrförmigen Körper (7) wenigstens eine Eingangskammer (23) und wenigstens eine Auslasskammer (24) definiert.

8. Pumpe nach Anspruch 7, die ebenfalls einen Eingangskreis (25) und einen Auslasskreis (29) umfasst, welche jeweils mit der Eingangskammer (23) und der Auslasskammer (24) kommunizieren.

9. Pumpe nach Anspruch 8, bei der die Eingangs- und Auslasskreise (25, 29) entsprechende ringförmige Leitungen (27, 31) enthalten, die in dem Gehäuse (2) ausgebildet sind und entsprechende Schlitze (28, 32), die durch den rohrförmigen Körper (7) gebildet sind, so dass sie in Benutzung zumindest teilweise den zugehörigen ringförmigen Durchführungen (27, 31) zugewandt sind.

10. Pumpe nach Anspruch 9, bei der die ringförmigen Durchführungen (27, 31) im Wesentlichen koaxial zueinander und zu der ersten Achse (3) angeordnet sind.

## Revendications

1. Pompe rotative à débit variable, en particulier pour de l'huile, la pompe comprenant au moins un premier et un second rotors (15, 12) s'engrenant l'un avec l'autre et ayant, respectivement, un premier et un second axes longitudinaux (3, 10) sensiblement parallèles l'un à l'autre ; et des premiers moyens d'actionnement (16) destinés à faire tourner lesdits premier et second rotors (15, 12) autour desdits premier et second axes (3, 10) respectivement ; et comprenant également des seconds moyens d'actionnement (22) destinés à faire tourner le second axe (10) autour du premier axe (3); la pompe rotative à débit variable étant **caractérisée par le fait que** lesdits moyens d'actionnement (22) sont capables de faire tourner le second axe (10), à une vitesse donnée, autour du premier axe (3) dans la même direction que, et dans la direction opposée, à la rotation du premier rotor (15) autour du premier axe (3) pour obtenir des valeurs différentes de débit.

2. Pompe selon la revendication 1, dans laquelle ledit second rotor (12) est un rotor tubulaire s'étendant autour dudit premier rotor (15).

3. Pompe selon la revendication 1 ou 2, dans laquelle lesdits seconds moyens d'actionnement (22) comprennent un corps tubulaire (7) s'étendant autour dudit second rotor (12) et coaxial avec ledit second axe (10) ; et un dispositif d'actionnement (19) destiné à faire tourner le corps tubulaire (7) autour dudit premier axe (3).

4. Pompe selon la revendication 3, dans laquelle ledit corps tubulaire (7) présente un diamètre intérieur approximativement égal mais non inférieur à un diamètre extérieur dudit second rotor (12).

5. Pompe selon la revendication 3 ou 4, dans laquelle lesdits seconds moyens d'actionnement (22) comprennent également un moyeu central (8) relié audit dispositif d'actionnement (19) pour tourner autour dudit premier axe (3) ; ledit corps tubulaire (7) étant intégré au moyeu (8).

6. Pompe selon la revendication 5, dans laquelle ledit premier rotor (15) présente un arbre d'entrée (16) s'étendant à travers ledit moyeu (8) et n'est pas relié de manière rotative au moyeu (8).

7. Pompe selon l'une quelconque des revendications 3 à 6, comprenant également un corps (2) destiné à supporter lesdits premier et second rotors (15, 12) et le corps tubulaire (7) de manière rotative ; le corps (2) définissant avec lesdits premier et second rotors (15, 12) et le corps tubulaire (7) au moins une chambre d'admission (23) et au moins une chambre de refoulement (24).

8. Pompe selon la revendication 7, comprenant également un circuit d'admission (25) et un circuit de refoulement (29) qui communiquent respectivement avec ladite chambre d'admission (23) et ladite chambre de refoulement (24).

9. Pompe selon la revendication 8, dans laquelle lesdits circuits d'admission et de refoulement (25, 29) comprennent des conduits annulaires respectifs (27, 31) formés dans ledit corps (2) ; et des fentes respectives (28, 32) formées dans ledit corps tubulaire (7) de manière à faire face au moins partiellement, lors de l'utilisation, auxdits relatifs conduits annulaires (27, 31).

10. Pompe selon la revendication 9, dans laquelle lesdits conduits annulaires (27, 31) sont sensiblement coaxiaux l'un avec l'autre et avec ledit premier axe (3).
